# EUROPÄISCHE PATENTSCHRIFT

(11) **EP 2 188 763 B1**
(45) Veröffentlichungstag und Bekanntmachung des Hinweises auf die Patenterteilung: **21.03.2012**
(21) Anmeldenummer: 08803038.2
(22) Anmeldetag: 14.08.2008
(51) Int. Cl.: G06K 19/077, G06M 3/00, G07C 11/00, G07F 7/08, G06F 7/10, G07F 7/10, H04L 9/00, G06K 19/073

(54) **BENUTZUNGSZÄHLER FÜR CHIPKARTE**
USE METER FOR CHIP CARD
COMPTEUR D'UTILISATIONS POUR CARTE À PUCE

(30) Priorität: 30.08.2007 DE 102007041370
(43) Veröffentlichungstag der Anmeldung: 26.05.2010
(73) Patentinhaber: Bundesdruckerei GmbH, 10958 Berlin (DE)
(72) Erfinder: WIRTH, Klaus-Dieter, 12683 Berlin (DE)
(74) Vertreter: Richardt Patentanwälte
(86) Internationale Anmeldenummer: PCT/EP2008/060697
(87) Internationale Veröffentlichungsnummer: WO 2009/027240

(56) Entgegenhaltungen:
- EP-A- 0 257 596
- DE-A1- 10 035 598
- DE-A1- 19 540 767
- DE-A1- 19 627 534
- DE-A1- 19 850 307
- JP-A- 10 069 435
- US-A1- 2003 005 315
- US-B1- 6 465 880

## Beschreibung

Die Erfindung betrifft eine Chipkarte mit zumindest einer Chipkartenfunktion, ein elektronisches Gerät, insbesondere ein Chipkartenterminal oder Computersystem mit einem Chipkarten-Lesegerät, sowie ein Verfahren zur Herstellung einer Chipkarte und ein Verfahren zur Inbenutzungnahme einer Chipkarte.

Für die Freischaltung einer Chipkartenfunktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Minimalwert stehenden Fehleingabezähler (wird auch als "Fehlbedienungszähler" bezeichnet) einer PIN wieder auf seinen initialen Maximalwert zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat. Für Chipkarten im Umfeld des Signaturgesetzes ist die Verwendung bzw. Anwendung von Super-PINs oder PUKs jedoch aus Sicherheitsgründen darauf beschränkt, dass lediglich der Fehlbedienungszähler zurückgesetzt wird. Eine neue PIN wird nicht übergeben. Hier muss eine neue Chipkarte beantragt werden, wenn die PIN vergessen wurde.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1).

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte automatisch in einen Benutzt-Status gesetzt werden. Eine spätere Änderung der persönlichen Geheimzahl wird durch einen übergeordneten Entsperrcode ermöglicht.

Chipkarten mit änderbarer PIN haben zwar gegenüber Chipkarten mit einer statischen PIN den Vorteil, dass die Chipkarte unter Umständen nicht durch eine neue ersetzt werden muss, wenn der Benutzer die PIN vergessen hat, beispielsweise in dem mit Hilfe der PUK der Fehlbedienungszähler zurückgesetzt und eine neue PIN eingegeben wird. Dieses bietet den weiteren Vorteil, dass der Anwender die PIN auf einen Wert setzen kann, der sich für den Anwender leicht merken lässt. Allerdings ist eine solche Vorgehensweise für sicherheitskritische Anwendungen, insbesondere für die Vornahme von digitalen Signaturen und im Zahlungsverkehr aufgrund der eingeschränkten Sicherheit gegen Manipulationen nicht akzeptabel. Daher wird bei Anwendungen, die eine sehr hohe Sicherheit erfordern, eine Neueingabe der PIN mittel PUK in der Regel nicht erlaubt. Dies bedeutet, dass lediglich das Rücksetzen des Fehlbedienungszählers mit der PUK erlaubt ist. Der Nachteil ist hier wiederum, dass bei Vergessen der PIN die Chipkarte ersetzt werden muss.

Nach der DE 10 2007 008 652 wird eine Erstnutzerfunktion der Chipkarte so ausgebildet, dass die Erstnutzerfunktion nach vorheriger Verwendung durch den Benutzer von ihrem Benutzt-Status rücksetzbar ist. Diese Rücksetzung von dem Benutzt-Status in den Erstbenutzungsstatus erfolgt auf eine sichere Art und Weise, nämlich durch Eingabe eines Codes. Die Rücksetzbarkeit der Erstnutzerfunktion in den Erstbenutzungsstatus nach vorheriger Benutzung ermöglicht die erneute Wahl einer Kennung zum Freischalten der Chipkartenfunktion, wenn der Benutzer beispielsweise die zunächst gewählte Kennung vergessen hat.

Nach der DE 10 2007 008 651 wird eine Chipkarte geschaffen, in der zumindest zwei geheime Kennungen, beispielsweise zwei PINs, zum Schutz derselben Chipkarten-Funktion gespeichert sind. Dem berechtigten Benutzer der Chipkarte wird von dem Herausgeber der Chipkarte zunächst nur eine der Kennungen mitgeteilt. Wenn der Benutzer diese Kennung vergisst, so kann er eine Anforderung an den Herausgeber der Chipkarte richten, um von dort die zweite auf seiner Chipkarte gespeicherte Kennung zu erhalten.

Nach der DE 10 2007 019 839 wird ein Verfahren zur Inbenutzungnahme einer Chipkarte geschaffen, wobei die Chipkarte einen Erstbenutzungsstatus und einen Benutztstatus einnehmen kann. Ein Übergang von dem Erstbenutzungsstatus in den Benutztstatus ist irreversibel, wobei eine Freischaltung einer Chipkartenfunktion der Chipkarte nur in dem Benutztstatus möglich ist. Das Verfahren zur Inbenutzungnahme der Chipkarte beinhaltet die folgenden Schritte: Eingabe von Identifizierungsdaten in die Chipkarte, Speicherung der Identifizierungsdaten in der Chipkarte, Eingabe eines Kommandos in die Chipkarte zur Auslösung eines Übergangs von dem Erstbenutzungsstatus in den Benutztstatus, wobei in der Chipkarte gespeicherten Identifizie-rungsdaten änderbar sind, wenn sich die Chipkarte in dem Erstbenutzungsstatus befindet.

Aus US 6,465,880 B1 ist eine Chipkarte bekannt, welche einen Benutzungszustand anzeigt. Hierzu hat die Chipkarte Sicherungen oder ein thermochromisches Material.

Aus DE 196 27 534 A1, DE 195 40 767 A1, DE 198 31 884 und DE 43 37 277 sind jeweils Chipkarten mit einem Zähler bekannt.

Der Erfindung liegt demgegenüber die Aufgabe zugrunde, eine verbesserte Chip-karte, ein elektronisches Gerät mit einer Chipkarten-Schnittatelle sowie ein Verfahren zur Herstellung einer Chipkarte und ein Verfahren zur Inbenutzungnahme einer Chipkarte zu schaffen.

Die der Erfindung zugrunde liegenden Aufgaben werden jeweils mit den Merkmalen der unabhängigen Patentansprüche gelöst,die gegen die erwähnte DE 196 27 534 abgegrenzt sind. Ausf0hrungsfotmen der Erfindung sind in den abhängigen Patentansprüchen angegeben.

Nach Ausführungsformen der Erfindung wird eine Chipkarte mit zumindest einer Chipkartenfunktion geschaffen. Die Chipkarte hat einen Nutzungszähler zur Zählung der Anzahl von Nutzungen der Chipkartertfunktion. Beispielsweise wird der Nutzungszähler mit jeder Nutzung der Chipkartenfunktion inkrementiert oder dekrementiert, sodass der Zählerstand des Nutzungszählers der Anzahl der Nutzungen der Chipkartenfunktion proportional oder umgekehrt proportional ist. Erfindungsgemäß ist der Zählerstand des Nutzungszählers über eine Schnittstelle der Chipkarte auslesbar. Mit Hilfe des Zählerstands kann geprüft werden, ob sich die Chipkarte in einem Erstbenutzungsstatus befindet oder nicht.

Unter "Erstbenutzungsstatus" wird hier ein Status der Chipkarte verstanden, wonach die Chipkarte oder deren zumindest eine Chipkartenfunktion nach Auslieferung durch den Hersteller oder Herausgeber der Chipkarte nicht von einem Dritten benutzt worden ist, das heißt, die Chipkarte befindet sich in einem unversehrten, vertrauenswürdigen Lieferzustand, sodass der Empfänger der Chipkarte sicher sein kann, dass die Chipkarte zum Beispiel bei deren Transport nicht von einem Dritten abgefangen und benutzt und/oder manipuliert worden ist. Die Überprüfung, ob sich eine gelieferte Chipkarte im Erstbenutzungsstatus befindet, ist für den Empfänger der Chipkarte besonders bei sicherheitskritischen Anwendungen wesentlich, insbesondere wenn es sich bei der Chipkartenfunktion um eine Signaturfunktion, eine Bezahlfunktion oder dergleichen handelt.

Nach einer Ausführungsform der Erfindung wird geprüft, ob sich die Chipkarte in ihrem Erstbenutzungsstatus befindet, indem der aus der Chipkarte ausgelesene Ist-Zählerstand des Nutzungszählers mit einem Soll-Zählerstand verglichen wird, der an den autorisierten Benutzer der Chipkarte oder dessen Computer gesondert übermittelt wird. Wenn der Ist-Zählerstand im Lieferzustand der Chipkarte dem Soll-Zählerstand gleicht, so bedeutet dies, dass die Chipkarte nach deren Auslieferung nicht benutzt worden ist, sodass sie sich in ihrem Erstbenutzungszustand befindet.

Nach einer Ausführungsform der Erfindung ist die zumindest eine Chipkartenfunktion der Chipkarte unabhängig davon, ob sich die Chipkarte beziehungsweise die Chipkartenfunktion in ihrem Erstbenutzungsstatus befindet, freischaltbar und nutzbar. Im Unterschied zum Stand der Technik ist also die Freischaltbarkeit der Chipkartenfunktion nicht mit dem Übergang von dem Erstbenutzungsstatus in den Benutztstatus verknüpft. Dies ist ein wesentlicher Vorteil für die Testbarkeit der Chipkarte seitens des Herstellers oder Herausgebers vor der Auslieferung an den Benutzer.

Nach einer Ausführungsform der Erfindung hat die Chipkarte Mittel zur Benutzeridentifizierung. Zur Benutzeridentifizierung wird auf der Chipkarte ein Referenzwert, wie zum Beispiel für eine PIN oder ein biometrisches Merkmal des Benutzers gespeichert. Zur Freischaltung der gewünschten Chipkartenfunktion muss der Benutzer die entsprechende PIN eingeben oder das entsprechende biometrische Merkmal erfassen lassen. Wenn die PIN beziehungsweise das biometrische Merkmal mit dem auf der Chipkarte gespeicherten Referenzwert übereinstimmt, so gilt der Benutzer als identifiziert, sodass die betreffende Chipkartenfunktion freigeschaltet wird.

Nach einer Ausführungsform der Erfindung ist den Mitteln zur Benutzeridentifizierung ein Fehlbedienungs-Zähler zugeordnet. Der Fehlbedienungs-Zähler ist so ausgebildet, dass die Chipkartenfunktion bei Erreichung eines vorgegebenen Extremwerts des Zählerstands gesperrt wird. Beispielsweise wird mit jeder falschen Eingabe der PIN der Fehlbedienungs-Zähler inkrementiert oder dekrementiert, bis er einen vorgegebenen Maximal- beziehungsweise Minimalwert erreicht hat.

Nach einer Ausführungsform der Erfindung ist der Soll-Zählerstand, den der Nutzungszähler der Chipkarte im Erstbenutzungszustand, das heißt im Lieferzustand, aufweisen soll, in einem elektronischen Speicher der Chipkarte selbst gespeichert. Der Soll-Zählerstand ist über die Schnittstelle der Chipkarte auslesbar, sodass der Ist-Zählerstand mit dem Soll-Zählerstand verglichen werden kann. Alternativ oder zusätzlich kann auch eine Signatur des Soll-Werts in der Chipkarte gespeichert sein. Die Signatur des Soll-Werts ist über die Schnittstelle der Chipkarte auslesbar, sodass sie von einem externen Gerät überprüft werden kann. Beispielsweise ist der Soll-Wert durch den Herausgeber oder Hersteller der Chipkarte digital signiert.

Ausführungsformen der erfindungsgemäßen Chipkarte sind besonders vorteilhaft, da der Übergang von dem Erstbenutzungsstatus in den Benutztstatus nicht zwingend mit der Vergabe zum Beispiel einer PIN durch den Benutzer gekoppelt ist. Dies hat den Vorteil, dass auf eine Transport-PIN oder die Wahl der PIN durch den Benutzer verzichtet werden kann. Die PIN kann dagegen herstellerseitig bereits bei der Personalisierung der Chipkarte vergeben werden.

Die Entkopplung des Übergangs vom Erstbenutzungsstatus in den Benutztstatus von der Vergabe der PIN hat ferner den Vorteil einer verbesserten Testbarkeit der Chipkarte. Die verbesserte Testbarkeit ergibt sich daraus, dass die Chipkarte nach deren Personalisierung in ihrem gesamten Funktionsumfang testbar ist, wobei mit jedem Test der zumindest einen Chipkartenfunktion der dieser Chipkartenfunktion zugeordnete Nutzungszähler je nach Ausführungsform inkrementiert oder dekrementiert wird. Der sich nach Durchführung aller Tests ergebende Zählerstand des Nutzungszählers wird als Soll-Zählerstand gespeichert, und zwar zum Beispiel auf der Chipkarte selbst und/oder in einer Datenbank oder es wird ein papierbasiertes oder elektronisches Dokument generiert, mit dem dieser Soll-Zählerstand gesondert an den autorisierten Benutzer der Chipkarte übertragen wird. Ein weiterer besonderer Vorteil ist dabei, dass die Anzahl der testweisen Nutzungen einer Chipkarten-funktion bei der Massenproduktion von Chipkarten von Chipkarte zu Chipkarte variiert werden kann, sodass Chipkarten unterschiedlicher Soll-Zählerstände ausgeliefert werden.

Die verbesserte Testbarkeit einer erfindungsgemäßen Chipkarte und die Dokumentation der gegebenenfalls durchgeführten Tests mit einem Prüfprotokoll ermöglichen es, eventuelle Reklamationen zu verifizieren. Dies ermöglicht es insbesondere zu überprüfen, ob eine Fehlfunktion einer neu ausgelieferten Chipkarte auf einer Fehlbenutzung oder einem Produktionsfehler beruht. Dies ermöglicht es insbesondere ferner, die bisher übliche hohe Anzahl von Kulanzleistungen zum Austausch angeblich defekt gelieferter Chipkarten zu reduzieren.

Nach einer Ausführungsform der Erfindung werden die testweisen Nutzungen der Chipkartenfunktion seitens des Herstellers protokolliert. Das daraus resultierende Test-Protokoll kann auf der Chipkarte und/oder einer externen Datenbank gespeichert werden. Um die Sicherheit weiter zu erhöhen, kann das Test-Protokoll mit dem privaten Schlüssel des Herstellers oder Herausgebers der Chipkarte signiert werden.

Nach einer Ausführungsform der Erfindung hat die Chipkarte mehrere Chipkartenfunktionen, wobei der Erstbenutzungsstatus einer oder mehrerer dieser Chipkartenfunktionen durch Vergleich der Ist-Zählerstände der den Chipkartenfunktionen zugeordneten Nutzungszähler mit den entsprechenden Soll-Zählerständen überprüft werden kann.

In einem weiteren Aspekt betrifft die Erfindung ein elektronisches Gerät, wie zum Beispiel einen Chipkarten-Terminal oder ein Computersystem, mit einer Chipkarten-Schnittstelle, mit einem Anwendungsprogramm zur Nutzung einer Chipkartenfunktion einer Chipkarte und einer Programmkomponente zur Überprüfung, ob sich die Chipkarte in einem Erstbenutzungsstatus befindet, wobei die Überprüfung anhand des Zählerstands eines der Chipkartenfunktion zugeordneten Nutzungszählers der Chipkarte erfolgt, und wobei die Chipkarten-Schnittstelle zum Auslesen des Zählerstands des Nutzungszählers aus der Chipkarte ausgebildet ist.

Nach einer Ausführungsform der Erfindung verfügt das elektronische Gerät über Ausgabemittel, über die der Ist-Zählerstand des Nutzungszählers ausgegeben werden kann, wie zum Beispiel ein LCD-Display oder einen Computermonitor. Der Benutzer der Chipkarte und des elektronischen Geräts kann sich dann vom Erstbenutzungsstatus der Chipkarte überzeugen, indem er oder sie den angezeigten Ist-Zählerstand mit dem Benutzer auf gesondertem Wege übermittelten Soll-Zählerstand vergleicht. Beispielsweise hat der Benutzer den Soll-Zählerstand zusammen mit der Produktdokumentation der neu ausgelieferten Chipkarte zum Beispiel per Post oder auf elektronischem Wege erhalten.

Nach einer Ausführungsform der Erfindung erfolgt der Vergleich zwischen dem Ist-Zählerstand des Nutzungszählers und dem Soll-Zählerstand automatisch durch das elektronische Gerät. Hierzu liest das elektronische Gerät den Soll-Wert von der Chipkarte. Alternativ oder zusätzlich fragt das elektronische Gerät den Soll-Zählerstand zum Beispiel über ein Computernetzwerk, insbesondere das Internet, von einer Datenbank ab. Für diese Datenbankabfrage kann ein Identifikator, der die Chipkarte und/oder deren Träger eindeutig identifiziert, als Datenbank-Zugriffsschlüssel verwendet werden. Bei diesem Identifikator kann es sich zum Beispiel um eine eindeutige ID, eine Kreditkartennummer oder einen Globally Unique Identifier (GUID) der Chipkarte handeln.

Nach einer Ausführungsform der Erfindung liest das elektronische Gerät die Signatur des Soll-Werts aus der Chipkarte und/oder aus der Datenbank, um die Signatur zu prüfen. Der für die Signaturprüfung erforderliche öffentliche Schlüssel des Herstellers der Chipkarte kann beispielsweise in dem elektronischen Gerät bereits gespeichert sein oder er wird von dem elektronischen Gerät von einem Verzeichnisserver, zum Beispiel über das Internet, abgefragt. Insbesondere kann der öffentliche Schlüssel in der Datenbank gespeichert sein, die auch die Soll-Zählerstände beinhaltet.

Nach einer Ausführungsform der Erfindung ist das elektronische Gerät zur Abfrage und Wiedergabe des gegebenenfalls beim Test der Chipkarte herstellerseitig erzeugten Test-Protokolls ausgebildet. Hierzu kann das elektronische Gerät das auf der Chipkarte gespeicherte Test-Protokoll auslesen und/oder von der externen Datenbank abfragen.

In einem weiteren Aspekt betrifft die Erfindung ein Verfahren zur Herstellung einer Chipkarte mit folgenden Schritten: Zurverfügungstellung eines Chipkarten-Rohlings mit einem Nutzungszähler für eine Chipkartenfunktion, testweise Benutzung der Chipkartenfunktion, wobei die Anzahl der Nutzungen durch den Nutzungszähler erfasst wird, Speicherung des Zählerstands des Nutzungszählers nach Beendigung der testweisen Benutzung der Chipkartenfunktion.

Ausführungsformen des erfindungsgemäßen Verfahrens sind besonders vorteilhaft, da eine vollständige Prüfung der Chipkartenfunktion nach der Personalisierung und nach der Initialisierung der Mittel zur Benutzeridentifizierung, das heißt beispielsweise nach Anlegen des so genannten PIN-Objekts, vollständig testbar ist. Beispielsweise wird herstellerseitig die Chipkartenfunktion freigeschaltet, indem ein zutreffender Referenzwert für die Benutzeridentifizierung eingegeben wird. Die Chipkartenfunktion wird dann ein- oder mehrfach benutzt, wobei die Testergebnisse protokolliert werden können. Die Anzahl der testweisen Nutzungen der Chipkarten-funktion kann zufällig oder pseudo-zufällig von Chipkarte zu Chipkarte bei der Massenproduktion von Chipkarten variiert werden.

In einem weiteren Aspekt betrifft die Erfindung ein Verfahren zur Inbenutzungnahme einer Chipkarte mit folgenden Schritten: Auslesen eines Zählerstands eines Nutzungszählers einer Chipkartenfunktion der Chipkarte über eine Chipkarten-Schnittstelle, Prüfung, ob sich die Chipkarte in ihrem Erstbenutzungsstatus befindet anhand des ausgelesenen Zählerstands.

Im Weiteren werden Ausführungsformen der Erfindung mit Bezugnahme auf die Zeichnungen näher erläutert. Es zeigen:
- Figur 1: ein Blockdiagramm einer Ausführungsform einer erfindungsgemäßen Chipkarte und eines erfindungsgemäßen elektronischen Geräts,
- Figur 2: ein Flussdiagramm einer Ausführungsform eines erfindungsgemäßen Verfahrens,
- Figur 3: eine weitere Ausführungsform einer erfindungsgemäßen Chipkarte,
- Figur 4: eine Ausführungsform eines erfindungsgemäßen Verfahrens zur Herstellung einer Chipkarte.
Elemente der nachfolgenden Ausführungsformen, die einander entsprechen, sind mit denselben Bezugszeichen gekennzeichnet.

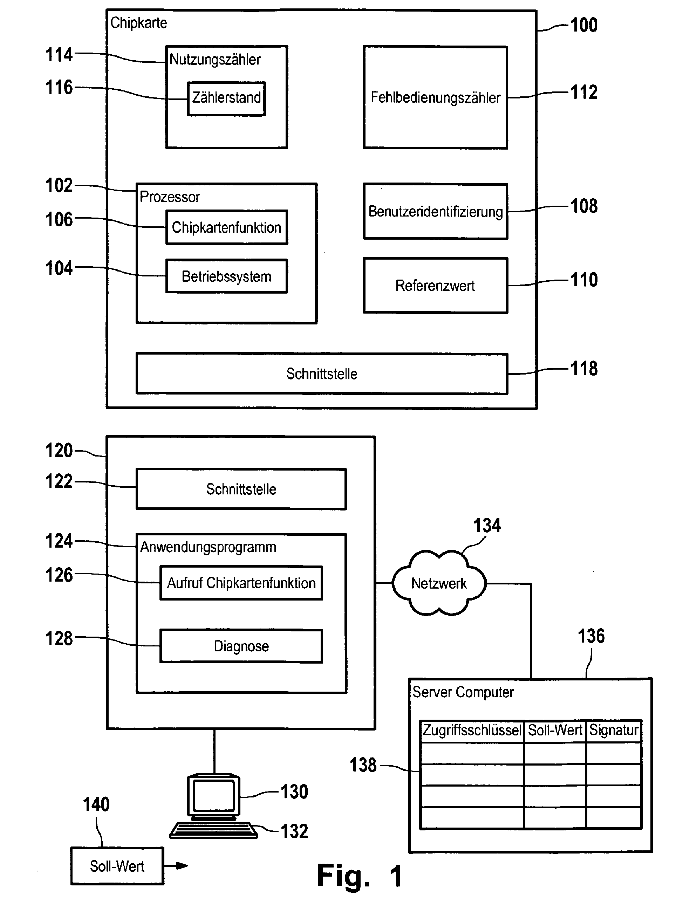

Die Figur 1 zeigt eine Chipkarte 100 mit einem Prozessor 102 zur Ausführung von Programminstruktionen 104 eines Chipkarten-Betriebssystems und von Programminstruktionen 106, durch die eine Chipkartenfunktion zur Verfügung gestellt wird. Bei der Chipkartenfunktion kann es sich um eine Signaturfunktion zur Generierung einer digitalen Signatur, eine Bezahlfunktion oder eine andere Chipkartenfunktion, insbesondere eine sicherheitskritische Chipkartenfunktion, handeln. Der Prozessor 102 kann auch zur Ausführung mehrerer verschiedener Chipkartenfunktionen vorgesehen sein.

Zum Schutz der Chipkartenfunktion gegen unberechtigte Benutzung ist eine zuvorige Benutzeridentifizierung erforderlich. Hierzu hat die Chipkarte 100 ein Modul 108 zur Benutzeridentifizierung mit einem Speicher 110, in dem ein Referenzwert für die Benutzeridentifizierung gespeichert ist. Die Benutzeridentifizierung kann beispielsweise anhand einer sogenannten PIN erfolgen. In diesem Fall kann das Modul 108 mit dem ihm zugeordneten Referenzwert als sogenanntes PIN-Objekt realisiert sein. Bei dem Referenzwert handelt es sich dann um die zutreffende PIN.

Alternativ oder zusätzlich kann die Benutzeridentifizierung auch anhand anderer Merkmale erfolgen, insbesondere anhand biometrischer Merkmale des autorisierten Benutzers der Chipkarte 100. Beispielsweise hat das Modul 108 einen Sensor zur Erfassung eines biometrischen Merkmals des Benutzers, wie zum Beispiel einen FingerabdruckSensor. In dem Speicher 110 sind in diesem Fall als Referenzwert die zuvor von dem autorisierten Benutzer erfassten biometrischen Fingerabdruck-Merkmale gespeichert.

Zur Freischaltung der Chipkartenfunktion 106 muss sich der autorisierte Benutzer gegenüber der Chipkarte 100 identifizieren, indem er oder sie eine zutreffende Kennung eingibt, die mit dem gespeicherten Referenzwert übereinstimmt beziehungsweise es müssen von dem Benutzer biometrische Merkmale erfasst werden, die mit den gespeicherten Referenzmerkmalen hinreichend übereinstimmen. Erst nach der Freischaltung der Chipkartenfunktion kann diese verwendet werden.

Dem Modul 108 beziehungsweise dem PIN-Objekt ist ein Fehlbedienungs-Zähler 112 zugeordnet. Der Fehlbedienungs-Zähler wird mit jeder fehlerhaften Eingabe oder Erfassung eines Referenzwerts durch das Modul 108 inkrementiert oder dekrementiert bis er einen vorgegebenen Extremwert erreicht hat. Mit der Erreichung dieses Extremwerts wird die Chipkartenfunktion gesperrt.

Beispielsweise hat der Fehlbedienungs-Zähler 112 einen initialen Zählerstand von 3. Mit jeder fehlerhaften Eingabe oder Erfassung der PIN bzw. des biometrischen Merkmals wird der Fehlbedienungs-Zähler um 1 dekrementiert, bis er den Zählerstand 0 erreicht. Bei einem Zählerstand von 0 wird die Chipkartenfunktion gesperrt. Je nach Ausführungsform der Chipkarte 100 kann diese Sperrung irreversibel oder reversibel sein. In einer reversiblen Ausführungsform kann beispielsweise der Fehlbedienungs-Zähler 112 mit Hilfe einer PUK zurückgesetzt werden.

Der Chipkartenfunktion ist ferner ein Nutzungszähler 114 zugeordnet. Der Nutzungszähler 114 ist so ausgebildet, dass er mit jeder Verwendung der Chipkarten-funktion inkrementiert oder dekrementiert wird. Die Anzahl der bereits erfolgten Nutzungen der Chipkartenfunktion wird also durch den Zählerstand 116 des Nutzungszählers 114 wiedergegeben.

Beispielsweise wird die Chipkarte 100 zunächst als Chipkarten-Rohling hergestellt, wobei der Zählerstand 116 des Nutzungszählers 114 auf einem Maximalwert steht. Wenn der Nutzungszähler 114 beispielsweise eine Breite von 2 Byte hat, so ist der maximale Zählerstand 116, den der Chipkarten-Rohling aufweist, 2¹⁶. Mit jeder Verwendung der Chipkartenfunktion wird der Zählerstand 116 dekrementiert, bis er schließlich 0 erreicht. Je nach Ausführungsform der Chipkarte 100 kann vorgesehen sein, dass keine weitere Verwendung der Chipkartenfunktion mehr möglich ist, wenn der Nutzungszähler einen Extremwert erreicht hat, das heißt in dem hier betrachteten Ausführungsbeispiel auf 0 steht.

In anderen Ausführungsformen kann vorgesehen sein, dass der Nutzungszähler einen anderen initialen Wert, wie zum Beispiel 0 hat, von dem aus er inkrementiert oder dekrementiert wird, bis ein vorgegebenen Extremwert erreicht wird, indem die Chipkartenfunktion dann nicht mehr verwendbar ist.

Das Modul 108 mit dem ihm zugeordneten Referenzwert, der Fehlbedienungs-Zähler 112 und/oder der Nutzungszähler 114 können ganz oder teilweise als integraler Bestandteil des Chipkarten-Betriebssystems, das durch die Programminstruktionen 104 zur Verfügung gestellt wird, realisiert sein.

Die Chipkarte 100 hat eine Schnittstelle 118 zur Kommunikation mit einem elektronischen Gerät 120, bei dem es sich zum Beispiel um einen Chipkarten-Terminal oder einen Computer mit einem Chipkarten-Lesegerät handeln kann. Das elektronische Gerät 120 beziehungsweise dessen Chipkarten-Lesegerät hat eine Schnittstelle 122, die der Schnittstelle 118 entspricht. Ferner hat das elektronische Gerät 120 zumindest einen Prozessor zur Ausführung eines Anwendungsprogramms 124 mit zumindest einem Programmmodul 126 zum Aufruf der durch den Programminstruktionen 106 zur Verfügung gestellten Chipkartenfunktion der Chipkarte 100 sowie zur Ausführung eines Programmmoduls 128 zur Diagnose der Chipkarte 100, das heißt insbesondere zur Prüfung, ob sich die Chipkarte 100 in deren Erstbenutzungszustand befindet.

Das elektronische Gerät 120 kann eine Anzeige 130, wie zum Beispiel einen Computermonitor oder ein LCD-Display, aufweisen sowie eine Tastatur 132. Das elektronische Gerät 120 kann ferner eine Netzwerk-Schnittstelle aufweisen, um über ein Netzwerk 134, insbesondere ein Computernetzwerk, wie zum Beispiel das Internet, mit einem Servercomputer 136 zu kommunizieren. In dem Servercomputer 136 kann eine Datenbank 138 gespeichert sein, in der für jede von dem Hersteller herausgegebene Chipkarte 100 ein Soll-Wert und eine digitale Signatur dieses Soll-Werts gespeichert sind. Ein Datenbank-Zugriff auf den Soll-Wert und der dazugehörigen Signatur erfolgt mit einem Zugriffsschlüssel, der sich aus einem Merkmal der Chipkarte 100 eindeutig ergibt. Bei diesem Zugriffsschlüssel kann es sich um einen auf der Chipkarte 100 visuell oder maschinell erfassbaren Identifikator, wie zum Beispiel eine Kreditkartennummer oder eine andere Karten-ID handeln. Ferner können als Zugriffsschlüssel auch die persönlichen Angaben des berechtigten Benutzers der Chipkarte 100 dienen, wie zum Beispiel dessen Name, Adresse und/oder Geburtsdatum.

Wenn ein Benutzer die Chipkarte 100 von dem Herausgeber der Chipkarte 100 zum Beispiel per Post erhält, so möchte er oder sie sich vor der ersten Benutzung der Chipkarte 100 vergewissern, dass sich diese in ihrem Erstbenutzungsstatus befindet, um sicher zu sein, dass kein Dritter unbefugt die Chipkarte 100 benutzt hat. Hierzu bringt der Benutzer die Chipkarte 100 mit dem elektronischen Gerät 120 in Verbindung, indem er beispielsweise die Chipkarte 100 in den Chipkarten-Leser des elektronischen Geräts 120 einführt. Der Benutzer ruft dann das Programmmodul 128 des Anwendungsprogramms 124 auf. Das Programmmodul 128 veranlasst daraufhin die Übertragung eines Chipkarten-Kommandos von der Schnittstelle 122 zu der Schnittstelle 118 mit einem Lesezugriff auf den Zählerstand 116 des Nutzungszählers 114. Der Zählerstand 116 wird daraufhin von der Chipkarte 110 über die Schnittstelle 118 an die Schnittstelle 122 übertragen.

Der von der Chipkarte 100 ausgelesene Ist-Zählerstand 116 des Nutzungszählers 114 muss auf Übereinstimmung mit einem Soll-Wert geprüft werden. Wenn der Ist-Zählerstand mit dem Soll-Wert übereinstimmt, so bedeutet dies, dass sich die Chipkarte 100 in deren Erstbenutzungsstatus befindet, und dass keine unbefugten Nutzungen Dritter erfolgt sind.

Gemäß einer Ausführungsform erhält der Benutzer diesen Soll-Wert in Form eines Dokuments 140. Bei dem Dokument 140 kann es sich um ein papierbasiertes Dokument handeln, auf dem Soll-Wert aufgedruckt ist. Bei dem Dokument 140 kann es sich auch um elektronisches Dokument handeln, das der Benutzer zum Beispiel per E-Mail erhält oder von einem Server-Computer herunterladen kann. Zur Erhöhung der Vertrauenswürdigkeit kann das elektronische Dokument 140 von dem Hersteller digital signiert sein.

Gemäß einer Ausführungsform wird der Ist-Zählerstand, der von der Chipkarte 100 ausgelesen worden ist, auf der Anzeige 130 angezeigt, sodass der Benutzer den Ist-Wert mit dem Soll-Wert vergleichen kann.

In einer weiteren Ausführungsform gibt der Benutzer über die Tastatur 132 einen Identifikator der Chipkarte 100 ein. Alternativ wird der Identifikator der Chipkarte 100 automatisch von dem elektronischen Gerät 120 erfasst oder er ist dort bereits gespeichert. Das Programmmodul 128 generiert dann eine Datenbankabfrage mit dem Identifikator als Zugriffsschlüssel. Diese Datenbankabfrage wird über das Netzwerk 134 an den Servercomputer 136 übertragen und von der Datenbank 138 ausgeführt. Als Antwort auf die Datenbankabfrage überträgt der Servercomputer 136 über das Netzwerk 134 den Soll-Wert und gegebenenfalls dessen Signatur an das elektronische Gerät 120.

Die Signatur des Soll-Werts wird gegebenenfalls von dem Programmmodul 128 automatisch mit Hilfe des öffentlichen Schlüssels des Herstellers oder Herausgebers der Chipkarte 100 überprüft. Wenn die Signatur zutreffend ist, wird der aus der Chipkarte 100 abgefragte Ist-Zählerstand 116 des Nutzungszählers 114 mit diesem Soll-Wert verglichen; wenn der Ist-Zählerstand mit dem Soll-Wert übereinstimmt, so folgt daraus, dass sich die Chipkarte in deren Erstbenutzungsstatus befindet, was zum Beispiel über die Anzeige 130 dem Benutzer signalisiert wird.

Nachdem sich der Benutzer auf diese Art und Weise Sicherheit darüber verschafft hat, dass die Chipkarte 100 in deren Lieferzustand unversehrt ist, sich also in deren Erstbenutzungsstatus befindet, kann er zum Beispiel seine PIN über die Tastatur 132 eingeben, die über die Schnittstellen 122, 118 an das Modul 108 übertragen wird, um die Chipkartenfunktion bei Übereinstimmung mit dem Referenzwert freizuschalten. Alternativ oder zusätzlich zur Eingabe der PIN wird beispielsweise ein biometrisches Merkmal des Benutzers unmittelbar von einem Sensor der Chipkarte 100 oder einem an das elektronische Gerät 120 angeschlossenen Sensor erfasst.

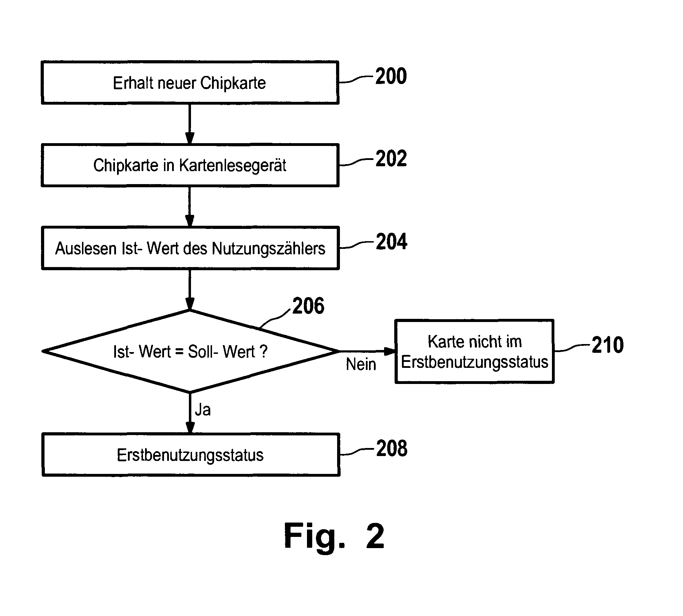

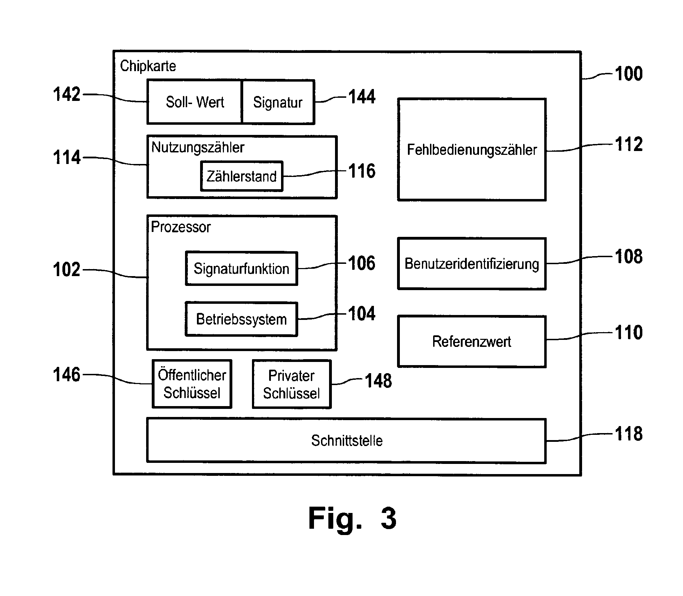

Die Figur 2 zeigt ein entsprechendes Flussdiagramm. In dem Schritt 200 erhält der Benutzer eine neue Chipkarte, zum Beispiel per Post. In dem Schritt 202 steckt der Benutzer seine neue Chipkarte in ein Karten-Lesegerät, um vor der erstmaligen Benutzung der Chipkarte zu prüfen, ob sich diese in ihrem Erstbenutzungszustand befindet. Hierzu wird in dem Schritt 204 der Ist-Zählerstand des Nutzungszählers der Chipkarte ausgelesen. In dem Schritt 206 wird überprüft, ob der Ist-Zählerstand mit dem Soll-Wert übereinstimmt. Gemäß Ausführungsformen der Erfindung wird der Soll-Wert gesondert an den autorisierten Benutzer der Chipkarte per Post oder auf elektronischem Weg übertragen oder unmittelbar von dessen elektronischen Gerät von einer Datenbank abgefragt. Ferner ist es auch möglich, dass der Soll-Wert auf der Chipkarte selbst abgespeichert und von der Chipkarte zur Überprüfung auf Übereinstimmung mit dem Ist-Zählerwert abgefragt wird (vergleiche hierzu die Ausführungsform der Figur 3).

Wenn die Überprüfung in dem Schritt 206 ergibt, dass der Ist-Zählerstand des Nutzungszählers der Chipkarte mit dem Soll-Wert übereinstimmt, so bedeutet dies, dass sich die Chipkarte in deren Erstbenutzungsstatus befindet (Schritt 208). Wenn die beiden Werte nicht übereinstimmen, so bedeutet dies, dass sich die Chipkarte nicht in deren Erstbenutzungsstatus befindet (Schritt 210). In diesem Fall kann der Benutzer den Herausgeber oder Hersteller der Chipkarte entsprechend informieren und die Übersendung einer neuen Chipkarte verlangen.

Die Figur 3 zeigt eine weitere Ausführungsform der Chipkarte 100. Bei dieser Ausführungsform ist der Soll-Wert 142 und dessen digitale Signatur 144 auf der Chipkarte 100 gespeichert. Bei der hier betrachteten Ausführungsform der Chipkarte 100 bilden die Programminstruktionen 106 eine Signaturfunktion zur Generierung einer digitalen elektronischen Signatur mit Hilfe eines kryptographischen Schlüsselpaares, welches dem berechtigten Benutzer der Chipkarte 100 zugeordnet ist, und welches aus einem öffentlichen Schlüssel 146 und einem privaten Schlüssel 148 besteht, wobei zumindest der private Schlüssel 148 in einem geschützten Speicherbereich der Chipkarte 100 gespeichert ist.

Zur Überprüfung des Erstbenutzungszustands der Chipkarte 100 wird bei dieser Ausführungsform wie folgt vorgegangen: Der Zählerstand 116 des Nutzungszählers 114, der Soll-Wert 142 und dessen Signatur 144 werden über die Schnittstelle 118 an ein externes elektronisches Gerät (vergleiche zum Beispiel das elektronische Gerät 120 in der Ausführungsform der Figur 1) übergeben. Das elektronische Gerät überprüft die Signatur 144 mit Hilfe des öffentlichen Schlüssels des Herausgebers oder Herstellers der Chipkarte 100. Wenn die digitale Signatur 144 zutreffend ist, vergleicht daraufhin das elektronische Gerät den Zählerstand 116 mit dem Soll-Wert 142. Stimmen die beiden Werte, das heißt der Zählerstand 116 und der Soll-Wert 142, überein, so generiert das elektronische Gerät 120 ein Signal, welches den Erstbenutzungszustand gegenüber dem Benutzer signalisiert. Der Benutzer kann dann sicher sein, dass die Chipkarte 100 im Zeitraum zwischen deren Auslieferung und dem Empfang durch den Benutzer nicht durch Dritte benutzt worden ist.

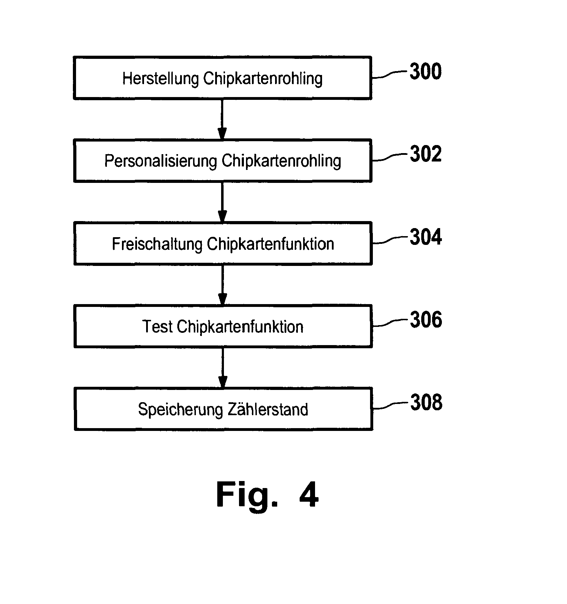

Die Figur 4 zeigt ein Verfahren zur Herstellung von Ausführungsformen erfindungsgemäßer Chipkarten. In dem Schritt 300 werden beispielsweise in einem Massenproduktionsverfahren Chipkarten-Rohlinge hergestellt. Diese können in Aufbau und Funktionsweise beispielsweise den Chipkarten in den Ausführungsformen der Figuren 1 und 3 entsprechen. Beispielsweise werden sämtliche Chipkarten-Rohlinge mit demselben initialen Zählerstand hergestellt. Wenn der Nutzungszähler beispielsweise eine Breite von 2 Byte hat, können die initialen Zählerstände 0000 0000 0000 0000 oder 1111 1111 1111 1111 entsprechend 2¹⁶ möglichen Nutzungen der betreffenden Chipkartenfunktion hergestellt werden. Mit jeder Nutzung der Chipkarten-funktion wird der Zählerstand des Nutzungszählers inkrementiert bzw. dekrementiert, so lange bis der Zählerstand seinen jeweiligen Extremwert erreicht hat.

In dem Schritt 302 werden die Chipkarten-Rohlinge personalisiert. Hierzu wird jedem Chipkarten-Rohling beispielsweise ein eindeutiger Identifikator zugeordnet, wie zum Beispiel eine Kreditkartennummer oder eine sonstige Karten-ID. Ferner können im Rahmen der Personalisierung auch die betreffenden Referenzwerte für die spätere Benutzeridentifizierung, wie zum Beispiel die PINs, in den Chipkarten gespeichert werden.

In den Schritten 304 und 306 werden die personalisierten Chipkarten getestet. Hierzu können sämtliche der Chipkarten getestet werden oder es kann eine statische Auswahl der Chipkarten getroffen werden, die getestet werden. Die Anzahl der Tests kann dabei statisch, zufällig oder pseudo-zufällig variiert werden.

Zum Test einer der personalisierten Chipkarten wird wie folgt vorgegangen: In dem Schritt 304 wird die zu testende Chipkartenfunktion freigeschaltet, indem beispielsweise die PIN für die Benutzeridentifizierung herstellerseitig eingegeben wird. In dem Schritt 304 wird die freigeschaltete Chipkartenfunktion ein- oder mehrfach getestet. Wenn es sich bei der Chipkartenfunktion zum Beispiel um eine Signaturfunktion handelt, wird mit jeder Erzeugung einer digitalen Signatur, das heißt jeder Verwendung der Chipkartenfunktion, der Zählerstand des dieser Chipkartenfunktion zugeordneten Nutzungszählers (vergleiche Nutzungszähler 114 in den Ausführungsformen der Figuren 1 und 3) inkrementiert oder dekrementiert. Der sich nach Ausführung der testweisen Nutzungen der Chipkartenfunktion ergebende Zählerstand des Nutzungszählers wird in dem Schritt 308 als Soll-Wert (vergleiche Soll-Wert 142) auf der Chipkarte selbst oder zum Beispiel in einer Datenbank (vergleiche Datenbank 138) gespeichert. Ferner kann dieser Soll-Wert mit Hilfe des privaten Schlüssels des Herstellers oder Herausgebers digital signiert werden, wobei auch diese digitale Signatur auf der Chipkarte selbst (vergleiche Signatur 144) oder in der Datenbank gespeichert werden kann.

Der Test der Chipkartenfunktion in dem Schritt 306 kann mit Hilfe eines Test-Protokolls protokolliert werden. Beispielsweise beinhaltet das Test-Protokoll die im Rahmen des oder der Tests digital signierten Dateien, deren digitale Signaturen und die Ergebnisse der Überprüfung dieser digitalen Signaturen. Die sich so ergebenden Test-Protokolle können wiederum auf der Chipkarte selbst oder in einer Datenbank gespeichert werden. Vorzugsweise werden auch die Test-Protokolle digital von dem Hersteller oder Herausgeber der Chipkarte digital signiert. Zur weiteren Erhöhung der Vertrauenswürdigkeit kann der Benutzer auf das Test-Protokoll durch Auslesen von der Chipkarte oder der Datenbank zugreifen und sich dieses auf dem elektronischen Gerät (vergleiche elektronisches Gerät 120 der Figur 1) anzeigen lassen.

Da die Anzahl der Tests der Chipkartenfunktion in dem Schritt 306 von Chipkarte zu Chipkarte variiert wird, wobei die Variation statistisch, zufällig oder pseudo-zufällig sein kann, haben die aus der Chipkarten-Herstellung resultierenden Chipkarten unterschiedliche Zählerstände von deren Nutzungszählern im Lieferzustand (vergleiche Zählerstand 116 in den Ausführungsformen der Figuren 1 und 3), wodurch Manipulationen praktisch unmöglich gemacht werden.

### Bezugszeichenliste

- 100: Chipkarte
- 102: Prozessor
- 104: Programminstruktionen
- 106: Programminstruktionen
- 108: Modul
- 110: Speicher
- 112: Fehlbedienungs-Zähler
- 114: Nutzungszähler
- 116: Zählerstand
- 118: Schnittstelle
- 120: elektronisches Gerät
- 122: Schnittstelle
- 124: Anwendungsprogramm
- 126: Programminstruktionen
- 128: Programminstruktionen
- 130: Anzeige
- 132: Tastatur
- 134: Netzwerk
- 136: Servercomputer
- 138: Datenbank
- 140: Dokument
- 142: Soll-Wert
- 144: digitale Signatur
- 146: öffentlicher Schlüssel
- 144: privater Schlüssel

## Patentansprüche

1. Chipkarte (100) mit
- zumindest einer Chipkartenfunktion (106) und
- einem Nutzungszähler (114) zur Zählung der Anzahl von Nutzungen der Chipkartenfunktion,
wobei der Nutzungszähler (114) so ausgebildet ist, dass er mit jeder Nutzung der Chipkartenfunktion Inkrementiert oder dekrementiert, wird,
wobei der Zählerstand (116) des Nutzungszählers über eine Schnittstelle (118) der Chipkarte auslesbar ist, um eine Überprüfung zu ermöglichen, ob sich die Chipkarte in einem Erstbenutzungsstatus befindet, und mit
- einem elektronischen Speicherlin (110), in dem ein Soll-Wert (142) für den Zählerstand des Nutzungszählers im Erstbenutzungsstatus gespeichert ist,
**dadurch gekennzeichnet, dass**
der Soll-Wert (142) über die Schnittstelle (118) der Chipkarte (100) auslesbar ist, wobei zur Überprüfung, ob sich die Chipkarte in dem Erstbenutzungsstatus befindet, der Zählerstand des Nutzungszählers der Chipkarte als Ist-Zählerstand zum Vergleich mit dem Soll-Wert auslesbar ist.

2. Chipkarte nach Anspruch 1, wobei die Chipkartenfunktion (106) freischaftbar ist, wenn der Erstbenutzungsstatus vorliegt.

3. Chipkarte nach Anspruch 1 oder 2, mit Mitteln (108, 110) zur Benutzeridentifizierung zur Freischaltung der Chipkartenfunktion, wobei der Zählerstand des Nutzungszählers (114) sowohl bei freigeschalteter als auch bei nicht frelge-schalteter Chipkartenfunktion auslesbar ist.

4. Chipkarte (100) nach einem der vorhergehenden Ansprüche, wobei in dem elektroni- schen Speicher eine Signatur (144) des Soll-Werts (142) Zähler-stands des Nutzungszählers in dem Erstbenutzungsstatus gespeichert ist, wobei die Signatur über die Schnittstelle (118) der Chipkarte auslesbar ist.

5. Elektronisches Gerät (126) mit
- einer Chipkarten-Schnittstelle (122),
- einem Anwendungsprogramm (124; 126) zur Nutzung einer Chipkarten-funktion (106) einer Chipkarte (100),
- einer Programmkomponente (128) zur Überprüfung, ob sich die Chipkarte in einem Erstbenutzungsstatus befindet, wobei die Programmkomponente so ausgebildet ist, dass die Überprüfung anhand des Zählerstands eines der Chipkartenfunktion zugeordneten Nutzungszähler (114) der Chipkarte und eines Soll-Wertes (142) erfolgt,
wobei die Chipkarten-Schnittstelle zum Auslesen des Zählerstands des Nutzungszählers aus der Chipkarte ausgebildet ist, wobei die Programmkomponente (128) zum Vergleich des von der Chipkarte ausgelesenen Zählerstands mit einem Soll-Wert ausgebildet ist, und mit Ausgabemitteln (130) für den von der Chipkarte ausgelesenen Zählerstand und/oder zur Signalisierung, dass der Erstbenutzungsstatus vorliegt,
dadurch gekennzelchnet, das
die Chipkarten-Schnittstelle (122) zum Auslesen des Soll-Werts (142) aus der Chipkarte (100) ausgebildet ist undloder das elektronische Gerät (120) eine Netzwerk-Schnittstelle zur Abfrage des Soll-Werts, Mittel (132) zur Eingabe oder Erfassung eines der Chipkarte zugeordneten Identifikator, und Mittel (128) zur Abfrage des Soll-Werts aus einer Datenbank (138) mit Hilfe des Identifikators als Zugriffsschlüssel, enthält.

6. Elektronisches Gerät nach einem der vorhergehenden Ansprüche 5, mit Mitteln zur Wiedergabe eines der Chipkarte zugeordneten Test-Protokolls, wobei in dem Test-Protokoll testweise Nutzungen der Chipkartenfunktion (106) protokolliert sind.

7. Verfahren zur Herstellung einer Chipkarte (100) mit folgenden Schritten:
- Zurverfügungstellung eines Chipkarten-Rohlings mit einem Nutzungszähler (114) für eine Chipkartenfunktion (106),
- testweise Benutzung der Chipkartenfunktion, wobei die Anzahl der Nutzungen durch den Nutzungszähler erfasst wird,
- Speicherung des Zählerstandes (116) des Nutzungszählers nach Beendigung der testweisen Benutzung der Chipkartenfunktion als Soll-Wert (142),
**dadurch gekennzeichnet, dass** die Speicherung des Zählerstands auf der Chipkarte so erfolgt, dass der Soll-Wert über eine Schnittstelle (118) der Chipkarte auslesbar ist, und/oder dass der Chipkarte ein Identifikator zugeordnet wird, wobei der Identifikator von der Chipkarte erfassbar ist, und die Speicherung des Zählerstands in einer externen Datenban (138) mit dem Identifikator als Zugriffsschlüssel erfolgt.

8. Verfahren nach Anspruch 7, wobei der Zählerstand (116) digital signiert wird und die digitale Signatur auf der Chipkarte und/oder der externen Datenbank (138) gespeichert wird.

9. Verfahren nach Anspruch 7 oder 8, wobei ein für den Postversand geeignetes Dokument (140) oder ein elektronisches Dokument mit dem Zählerstand (116) und/oder der digitalen Signatur des Zählerstands (116) generiert wird.

10. Verfahren zur Inbenutzungnahme einer Chipkarte (100) mit folgenden Schritten:
- Auslesen eines Zählerstands (116) eines Nutzungszählers (114) einer Chipkartenfunktion (106) der Chipkarte über eine Chlpkarten-Schnittstelle (118),
- Prüfung, ob sich die Chipkarte in ihrem Erstbenutzungsstatus befindet anhand des ausgelesenen Zählerstands,
**dadurch gekennzeichnet, dass** die Prüfung, ob sich die Chipkarte (100) in deren Erstbenutzungsstatus befindet, anhand eines Vergleichs des aus der Chipkarte ausgelesenen Zählerstands mit einem Soll-Wert (142) durchgeführt wird, wobei der Soll-Wert
- aus der Chipkarte ausgelesen wird, oder
- von einer externen Datenbank (138) abgefragt wird, wobei die Datenbankabfrage mit Hilfe eines der Chipkarte (100) zugeordneten Identifikators als Zugriffsschlüssel erfolgt.

11. Verfahren nach Anspruch 10, wobei ein Test-Protokoll der Chipkarte hinsichtlich einer oder mehrerer testweis Nutzungen der Chipkartenfunktion von der Chipkarte (100) oder einer Datenbank (138) abgefragt und von einem elektronischen Gerät (120) wiedergegeben wird.

## Claims

1. Chip card (100) having
- at least one chip card function (106) and
- a usage counter (114) for counting the number of usages of the chip card function,
with the usage counter (114) being designed such that it is incremented or decremented with each usage of the chip card function,
it being possible for the counter reading (116) of the usage counter to be read out via an interface (118) of the chip card in order to be able to check whether the chip card is in a first-use state, and having
- an electronic memory (110) in which a setpoint value (142) for the counter reading of the usage counter in the first-use state is stored,
**characterized in that**
the setpoint value (142) can be read out via the interface (118) of the chip card (100), it being possible to read out the counter reading of the usage counter of the chip card as the actual counter reading for comparison with the setpoint value for the purpose of checking whether the chip card is in the first-use state.

2. Chip card according to Claim 1, it being possible to enable the chip card function (106) when the said chip card is in the first-use state.

3. Chip card according to Claim 1 or 2, having means (108, 110) for user identification for enabling the chip card function, it being possible to read out the counter reading of the usage counter (114) both when the chip card function is enabled and when the chip card function is not enabled.

4. Chip card (100) according to one of the preceding claims, with a signature (144) of the setpoint value (142) of the counter reading of the usage counter in the first-use state being stored in the electronic memory, it being possible to read out the signature via the interface (118) of the chip card.

5. Electronic device (120) having
- a chip card interface (122),
- an application program (124; 126) for using a chip card function (106) of a chip card (100),
- a program component (128) for checking whether the chip card is in a first-use state
with the program component being designed such that the check is made on the basis of the counter reading of a usage counter (114), which is associated with the chip card function, of the chip card and on the basis of a setpoint value (142),
with the chip card interface being designed for the purpose of reading out the counter reading of the usage counter from the chip card, with the program component (128) being designed to compare the counter reading which is read out from the chip card with a setpoint value, and having output means (130) for the counter reading which is read out from the chip card and/or for signalling that the chip card is in the first-use state,
**characterized in that**
the chip card interface (122) is designed to read out the setpoint value (142) from the chip card (100) and/or
the electronic device (120) contains a network interface for interrogating the setpoint value, means (132) for inputting or detecting an identifier which is associated with the chip card, and means (128) for interrogating the setpoint value from a database (138) with the aid of the identifier as an access key.

6. Electronic device according to Claim 5, having means for reproducing a test protocol which is associated with the chip card, with the test-related usages of the chip card function (106) being recorded in the test protocol.

7. Method for producing a chip card (100), comprising the following steps:
- providing a chip card blank having a usage counter (114) for a chip card function (106),
- test-related use of the chip card function, with the number of usages being detected by the usage counter,
- storing the counter reading (116) of the usage counter after the end of the test-related use of the chip card function as a setpoint value (142),
**characterized in that**
the counter reading is stored in the chip card such that the setpoint value can be read out via an interface (118) of the chip card, and/or **in that**
an identifier is associated with the chip card, it being possible for the identifier to be detected by the chip card, and the counter reading being stored in an external database (138) with the identifier as an access key.

8. Method according to Claim 7, with the counter reading (116) being digitally marked and the digital signature being stored in the chip card and/or the external database (138).

9. Method according to Claim 7 or 8, with a document (140) which is suitable for postal despatch or an electronic document containing the counter reading (116) and/or the digital signature of the counter reading (116) being generated.

10. Method for commissioning a chip card (100), comprising the following steps:
- reading out a counter reading (110) of a usage counter (114) of a chip card function (106) of the chip card via a chip card interface (118),
- checking whether the chip card is in its first-use state on the basis of the read-out counter reading,
**characterized in that** the check to determine whether the chip card (100) is in its first-use state is carried out on the basis of a comparison of the counter reading which is read-out from the chip card with a setpoint value (142), with the setpoint value
- being read out from the chip card, or
- being interrogated by an external database (138), with the database being interrogated with the aid of an identifier, which is associated with the chip card (100), as an access key.

11. Method according to Claim 10, with a test protocol of the chip card being interrogated in respect of one or more test-related usages of the chip card function by the chip card (100) or a database (138) and being reproduced by an electronic device (120).

## Revendications

1. Carte à puce (100) présentant :
- au moins une fonction (106) de carte à puce et
- un compteur d'utilisations (114) qui compte le nombre d'utilisations de la fonction de la carte à puce,
le compteur d'utilisations (114) étant configuré de telle sorte qu'il est incrémenté ou décrémenté lors de chaque utilisation de la fonction de la carte à puce,
l'état (116) du compteur d'utilisations pouvant être lu par l'intermédiaire d'une interface (118) de la carte à puce pour permettre de vérifier si la carte à puce se trouve dans un état de première utilisation,
- et une mémoire électronique (110) dans laquelle une valeur de consigne (142) de l'état du compteur d'utilisations à l'état de première utilisation est conservée en mémoire,
**caractérisée en ce que**
la valeur de consigne (142) peut être lue par l'intermédiaire de l'interface (118) de la carte à puce (100) et **en ce que** pour vérifier si la carte à puce se trouve à l'état de première utilisation, l'état du compteur d'utilisations de la carte à puce constituant un état effectif du compteur peut être lu pour être comparé à la valeur de consigne.

2. Carte à puce selon la revendication 1, dans laquelle la fonction (106) de la carte à puce peut être activée librement lorsqu'elle se trouve dans l'état de première utilisation.

3. Carte à puce selon les revendications 1 ou 2, dotée de moyens (108, 110) d'identification de l'utilisateur qui permettent d'activer la fonction de la carte à puce, l'état du compteur d'utilisations (114) pouvant être lu aussi bien lorsque la fonction de la carte à puce est activée que lorsqu'elle n'est pas activée.

4. Carte à puce (100) selon l'une des revendications précédentes, dans laquelle une signature (144) de la valeur de consigne (142) de l'état du compteur d'utilisations lorsque la carte à puce est à l'état de première utilisation est conservée en mémoire dans la mémoire électronique, la signature pouvant être lue par l'intermédiaire de l'interface (118) de la carte à puce.

5. Appareil électronique (120) présentant
- une interface (122) pour carte à puce,
- un programme d'application (124; 126) permettant d'utiliser une fonction (106) d'une carte à puce (100),
- un composant (128) de programme permettant de vérifier si la carte à puce se trouve dans un état de première utilisation,
le composant de programme étant configuré de telle sorte que la vérification s'effectue à l'aide de l'état d'un compteur d'utilisations (114) de la carte à puce, associé à la fonction de la carte à puce, et d'une valeur de consigne (142),
l'interface pour carte à puce étant configurée pour lire l'état du compteur d'utilisations de la carte à puce, le composant (128) du programme étant configuré pour comparer l'état lu sur la carte à puce et une valeur de consigne, des moyens de sortie (130) étant prévus pour présenter l'état du compteur lu sur la carte à puce et/ou pour signaler si la carte à puce se trouve à l'état de première utilisation,
**caractérisé en ce que**
l'interface (122) pour carte à puce est configurée pour lire la valeur de consigne (142) sur la carte à puce (100) et/ou **en ce que** l'appareil électronique (120) contient une interface réseau qui permet de demander la valeur de consigne, des moyens (132) qui permettent d'introduire ou de détecter un identificateur associé à la carte à puce et des moyens (128) qui permettent de demander la valeur de consigne dans une base de données (138) à l'aide de l'identificateur qui sert de clé d'accès.

6. Appareil électronique selon la revendication 5, doté de moyens qui permettent de reproduire un protocole de test associé à la carte à puce, des utilisations de la fonction (106) de la carte à puce étant enregistrées à titre de test dans le protocole de test.

7. Procédé de fabrication d'une carte à puce (100), le procédé comportant les étapes suivantes :
- préparation d'une ébauche de carte à puce dotée d'un compteur d'utilisations (114) d'une fonction (106) de la carte à puce,
- utilisation à titre de test de la fonction de la carte à puce, le nombre des utilisations étant saisi par le compteur d'utilisations,
- à la fin de l'utilisation à titre de test de la fonction de la carte à puce, mise en mémoire de l'état (116) du compteur d'utilisations à titre de valeur de consigne (142),
**caractérisé en ce que**
la mise en mémoire de l'état du compteur sur la carte à puce s'effectue de telle sorte que la valeur de consigne puisse être lue par une interface (118) de la carte à puce et/ou
**en ce qu'**un identificateur est associé à la carte à puce, l'identificateur pouvant être saisi par la carte à puce, la mise en mémoire de l'état du compteur s'effectuant dans une base de données (138) externe avec l'identificateur comme clé d'accès.

8. Procédé selon la revendication 7, dans lequel l'état (116) du compteur est signé numériquement et la signature numérique est conservée en mémoire sur la carte à puce et/ou dans une base de données (138) externe.

9. Procédé selon les revendications 7 ou 8, dans lequel un document (140) convenant pour un envoi postal ou un document électronique qui contiennent l'état (116) du compteur et/ou la signature numérique de l'état (116) du compteur sont produits.

10. Procédé de mise en utilisation d'une carte à puce (100), le procédé comportant les étapes suivantes :
- lecture de l'état (116) d'un compteur d'utilisations (114) d'une fonction (106) de la carte à puce par l'intermédiaire d'une interface (118) de la carte à puce,
- à l'aide de l'état du compteur qui a été lu, vérification que la carte à puce se trouve à son état de première utilisation,
**caractérisé en ce que**
la vérification que la carte à puce (100) se trouve dans son état de première utilisation s'effectue à l'aide d'une comparaison de l'état du compteur lu sur la carte à puce et d'une valeur de consigne (142),
- la valeur de consigne étant lue sur la carte à puce ou
- étant demandée à une base de données externe (138), l'interrogation de la base de données s'effectuant à l'aide d'un identificateur qui est associé à la carte à puce (100) et qui sert de clé d'accès.

11. Procédé selon la revendication 10, dans lequel un protocole de test de la carte à puce concernant une ou plusieurs utilisations à titre de test de la fonction de la carte à puce est demandé à la carte à puce (100) ou à une base de données (138) et est reproduit par un appareil électronique (120).
